# EUROPEAN PATENT APPLICATION

(11) **EP 1 792 811 A2**
(43) Date of publication of application: **06.06.2007**
(21) Application number: 06125301.9
(22) Date of filing: 04.12.2006
(51) Int. Cl.: B62D 55/24

(54) **Endless track belt**

(30) Priority: 02.12.2005 US 741951 P; 29.09.2006 US 540409
(71) Applicant: THE GOODYEAR TIRE & RUBBER COMPANY, Akron, Ohio 44316-0001 (US)
(72) Inventor: Peterson, Paul John, Cuyahoga Falls, OH 44223 (US); Folk, Katherine Ann, Uniontown, OH 44685 (US); Schisler, Robert Charles, Monroe Falls, OH 44262 (US); Feldmann, Thomas Brian, Ohio, OH 45011 (US)
(74) Representative: Kutsch, Bernd

(57) **Abstract**

An endless track belt (20) for use in an industrial or agricultural vehicle is described. The endless rubber track belt comprises a rubber carcass having an inner surface (26) having one or more guide-drive lugs (16) and an outer surface having tread lugs (24), the guide-drive lugs (16) having a reinforcement layer (40) of preferably low friction material which extends substantially along the width of the guide-drive lug (16). The low friction reinforcement material may also optionally extend substantially along the width of the track belt (20).

## Description

### Field of the Invention

This invention relates to endless rubber track belts.

### Background of the Invention

Rubber endless tracks such as for use on agricultural or industrial vehicles typically have an internal center ribbon of individual lugs which engage drive bars on a drive wheel. The continued use and contact between the drive bar and drive lugs cause internal lug stresses, and surface wear at the points of contact. Additionally, the internal center ribbon of lugs are typically functioning not only to transmit power from the drive wheel to the track, but also to retain the track onto the vehicle. Contact between the vehicle undercarriage wheels and the longitudinal or guide surfaces of the inner lugs frequently occurs as the vehicle maneuvers during normal service. This contact can cause wearing of the inner lugs which can be severe depending upon various vehicle design features and usage applications. Driving and/or guiding forces on the inner lugs, henceforth referred to as guide-drive lugs, can lead to eventual chunking of the rubber surface and possibly to complete removal of the drive lugs, making the track unserviceable. Thus a track belt having guide-drive lugs which are stronger and more resistant to wear is desired.

### Summary of the Invention

The invention provides an endless rubber track belt comprising according to claim 1.

Dependent claims refer to preferred embodiments of the invention.

### Brief Description of the Drawings

Figure 1 is a perspective view of an endless rubber track assembly.
Figure 2 is a perspective view of a section of the endless rubber track shown in Figure 1;
Figure 3 is a perspective view of a drive lug.
Figure 4 is a cross-sectional view of the endless rubber track of Figure 2 in the direction 4-4;

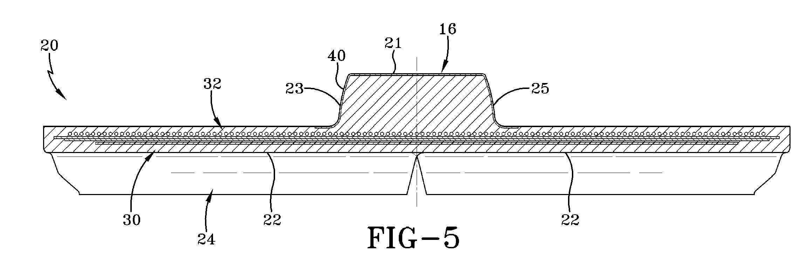

Figure 5 is a cross-sectional view of the endless rubber track of Figure 2 in the direction 5-5.

### Detailed Description of the Invention

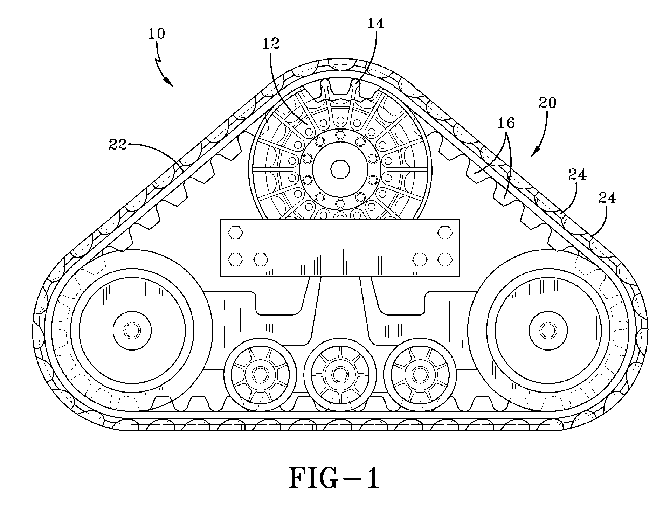

Figure 1 illustrates a track assembly 10 which may be used on an industrial or agricultural vehicle (not shown). The track assembly 10 includes a drive wheel 12 comprising a plurality of teeth or drive bars 14 which are positioned for mating engagement with guide-drive lugs 16. The drive lugs 16 are mounted on a rubber track 20 having an endless elongate carcass. The endless track carcass has an outer surface 22 comprising a plurality of ground engaging tread lugs 24 and an inner surface 26 with a plurality of guide-drive lugs 16, preferably located on the center portion of the carcass.

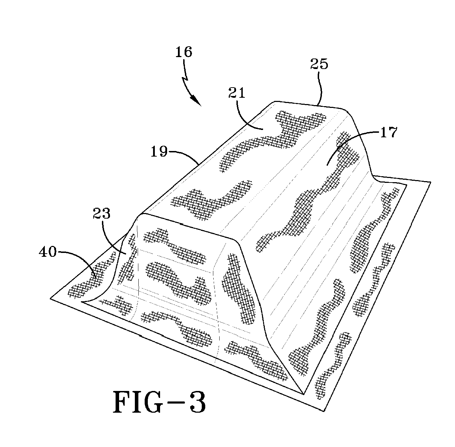

The guide-drive lugs 16 as shown in Figure 3 comprise an elongate shaped bar with inclined drive faces 17, 19 and an upper flat face 21. The corners of the joined faces are rounded to reduce stress concentrations. Guide faces 23, 25 are also flat. The guide-drive lugs may also have various other shapes.

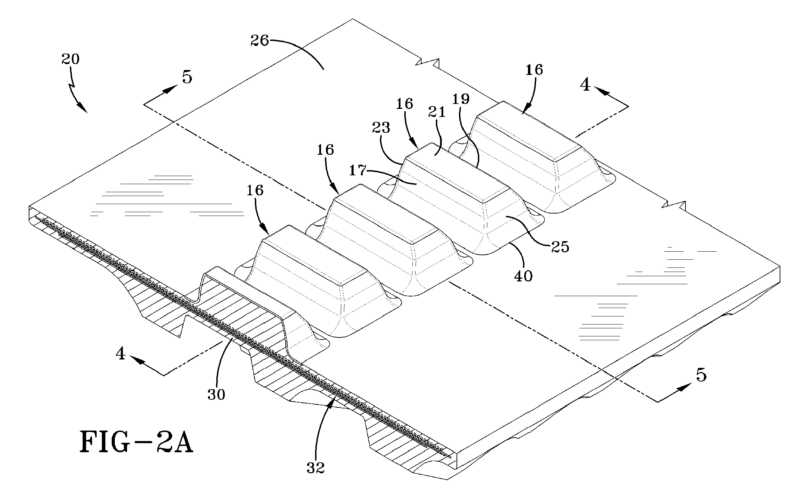

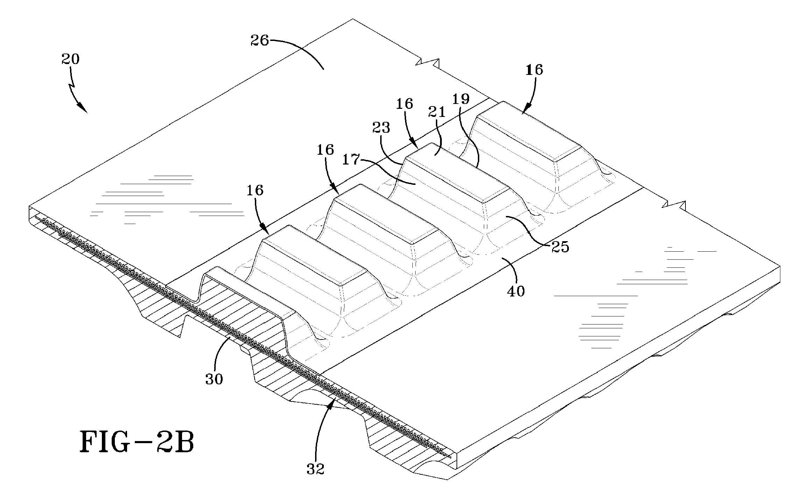

As shown in Figure 2, the belt carcass 20 typically comprises one or more layers of gum rubber or elastomeric material 30. Embedded within the gum rubber are one or more reinforcement layers 32 which extend transversely along the track width. The reinforcement layers may comprise longitudinal cable reinforcement layers, fabric reinforcement layers or any other reinforcement layer known to those skilled in the art.

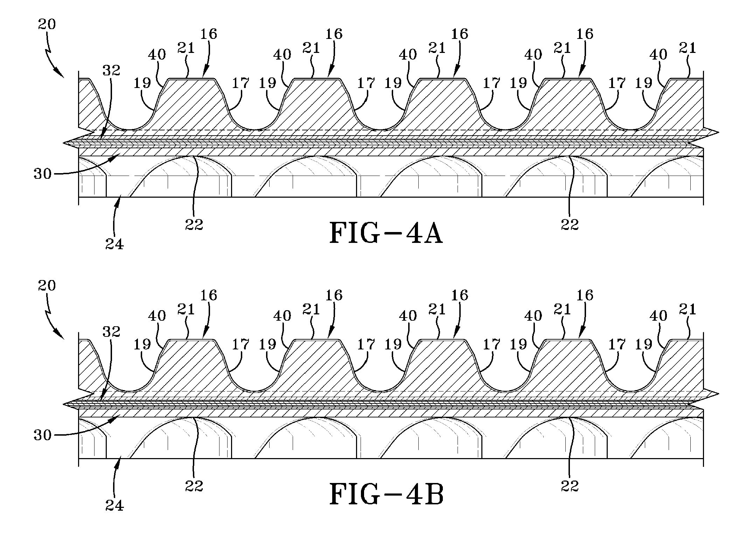

The guide-drive lugs as shown in Figures 2-4 comprise rubber or elastomeric material, and have one or more layers 40 of reinforcement material therein. The reinforcement material as shown in Figure 3, may completely cover the drive lug and extend down the sides of the lug onto the carcass. The reinforcement layer may also optionally extend continuously all the way around the track, wherein the width may be slightly greater than the drive lug width or be equal to the carcass width, thus providing a protective effect to the drive lugs and the track inner surface.

The reinforcement layer, or layers, may comprise the following materials: nylon, polyester, polyethylene, polyurethane, rayon, Kevlar, aramid, metal, natural fibers such as cotton, glass fibers, carbon fibers, ceramic fibers or plastic fibers. The reinforcement material may also be a fiber loaded rubber layer, with fibers oriented in a transverse direction or in a random direction. For example, the reinforcement material may comprise tire ply (rubber coated cords), with the fibers oriented in any desired orientation. The fibers may be natural fibers such as cotton, nylon, polyester, polyethylene, polyurethane, rayon, glass fibers, steel, or plastic. The invention is not limited to the reinforcement materials stated above, and may also comprise any low friction material considered suitably effective for the specific type of track belt usage. It is preferable that the reinforcement material having a low coefficient of friction in the range of 0.10 to 0.80.

If the reinforcement material is tire ply, then two or more layers may be used. If two or more layers are used, the layers may have cords oriented at opposite angular orientation, e.g., layer one has parallel cords oriented at 45 degrees for example, while layer two has parallel cords oriented at -45 degrees for example (although any desired angular orientation may be used). Preferably, light nylon tire cord is used, which is used in airsprings.

If the reinforcement material is tire ply, then two or more layers may be used. If two or more layers are used, the layers may have cords oriented at opposite angular orientation, e.g., layer one has parallel cords oriented at 45 degrees, while layer two has parallel cords oriented at -45 degrees (although any desired angular orientation may be used). Preferably, light nylon tire cord is used, which is used in airsprings.

The reinforcement material may comprise the track inner surface or be embedded under the track inner surface at a distance d, d typically being in the range of 0.020" (0.508 mm) to 0.13" (3.302 mm). Preferably, the reinforcement layer is covered on both sides with a skim coat layer of rubber.

The reinforcement layer is preferably incorporated into the track belt during the track belt manufacturing process. In this case, the reinforcement material is prepared independently, and prior to, the track manufacturing process. The track belt can be formed and vulcanized in a pressurized molding process. Molds used in said process have shaped lug cavities which form guide-drive lugs into their intended final shape. The guide-drive lugs can be presented to the final molding process as non premolded extruded pieces, which are cut to length, approximately the shape of the lug cross sectional contour. At the ends they may be cut on a bias to more approximate the ends of the mold cavities. Otherwise, the lugs may be pre-molded similar to what is illustrated in US-A- 5,536,464. Said slugs can be covered individually with separate pieces of reinforcing materials prior to lugs being presented to the track belt build and vulcanization process. Alternatively, the guide-drive lug reinforcing material can be applied to the particular surfaces as a continuous piece. In this method, the prepared inner lug slugs are positioned onto the inside surface of the uncured carcass at their intended final molded relative locations. Then, prior to molding, the single piece of reinforcement is placed over the green inner lug slugs. Additional fitting of the reinforcement to the green inner slugs may be done at this time; however, the process of compressing the mold may also be relied on to form fit the reinforcement over the intended surfaces. After the reinforcement has been fitted to the inner lug slugs final vulcanization occurs via imparting appropriate pressure and temperature onto the uncured track belt. This is the final step in incorporating the guide-drive reinforcement to the track belt.

## Claims

1. An endless rubber track belt comprising a rubber carcass having an inner surface (26) having one or more guide-drive lugs (16) and an outer surface (22) having at least one tread lug (24), at least one guide-drive lug (16) having at least one reinforcement layer (40) which extends substantially along the width of the guide-drive lug (16).

2. The endless rubber track belt of claim 1 wherein the reinforcement layer (40) extends substantially along the width of the track belt (20).

3. The endless rubber track belt of claim 1 or 2 wherein the at least one reinforcement layer (40) comprises a reinforcement material being a low friction material, preferably a material having a coefficient of friction in the range of 0.1 to 0.8.

4. The endless rubber track belt of at least one of the previous claims wherein the width of the reinforcement layer (40) is equal to or greater than the width of the guide-drive lug (16).

5. The endless rubber track belt of at least one of the previous claims wherein the reinforcement layer (40) covers the guide-drive lug (16) outer surface, preferably the outer surface of all guide-drive lugs of the track belt (20).

6. The endless rubber track belt of at least one of the previous claims wherein the reinforcement layer (40) is embedded within at least one guide-drive lug (16).

7. The endless rubber track belt of at least one of the previous claims wherein the reinforcement layer (40) comprises nylon, polyester, polyethylene, polyurethane, Kevlar, glass fibers, carbon fibers, ceramic fibers, cotton, metal, plastics, or mixtures thereof.

8. The endless rubber track belt of at least one of the previous claims wherein the reinforcement layer (40) covers the outer carcass edges of the track belt (20).

9. The endless rubber track belt of at least one of the previous claims wherein the reinforcement layer (40) completely covers all the guide-drive lugs (16) and/or extends down the sides of the guide-drive lugs onto the carcass.

10. The endless rubber track belt of at least one of the previous claims wherein the reinforcement layer (40) extends continuously all the way around the track and, preferably, wherein the width of the reinforcement layer (40) is either slightly greater than the drive lug width or equal to the carcass width.
